# EUROPEAN PATENT APPLICATION

(11) **EP 2 506 247 A1**
(43) Date of publication of application: **03.10.2012**
(21) Application number: 12161335.0
(22) Date of filing: 26.03.2012
(51) Int. Cl.: G09G 3/36

(54) **Pixel circuit and method of operating the same**

(30) Priority: 29.03.2011 KR 20110028205
(71) Applicant: Samsung Electronics Co., Ltd., Suwon-si, Gyeonggi-do, 443-742 (KR)
(72) Inventor: Kim, Jung-woo, 449-712 Gyeonggi-do (KR); Jung, Myoung-hoon, 449-712 Gyeonggi-do (KR)
(74) Representative: Greene, Simon Kenneth

(57) **Abstract**

According to an example embodiment, a pixel circuit for driving a display unit includes a plurality of capacitive devices (C1,C2), a first switching device (T1) and a second switching device (T2). The plurality of capacitive devices (C1,C2) are configured to apply a driving voltage to the display unit (10). The first switching device (T1) is configured to selectively supply a data signal (Vd) to a first capacitive device (C1) of the plurality of capacitive devices (C1,C2) based on a first scan signal (Vs1). The second switching device (T2) is configured to selectively supply the data signal (Vd) to a second capacitive device (C2) of the plurality of capacitive devices (C1,C2) based on a second scan signal (Vs2).

## Description

### BACKGROUND

### 1. Field

Example embodiments relate to pixel circuits and methods of operating the same.

### 2. Description of the Related Art

Various technologies have been introduced to provide pixel circuits that may be used in display devices, e.g., reflective displays, which need a high driving voltage. Recently, research is actively being conducted on reflective displays that have good visibility outdoors, may lessen the glare of direct sunlight, and consume a small amount of power.

Examples of reflective displays include a polymer dispersed liquid crystal (PDLC) display, an electrophoretic display (EPD), a cholesteric LCD, and so on. In the PDLC display, an image is displayed based on the principle that liquid crystal molecules are arranged randomly thus causing scattering of light when no voltage is applied thereto and are arranged in order to allow light to pass therethrough when a voltage is applied thereto. In this manner, sufficient contrast is not obtained when liquid crystal cells are not appropriately thick, and a driving voltage should thus be high. The EPD is based on an electrophoretic phenomenon whereby colloid particles move toward one of electrodes installed in a colloid solution when a direct voltage is applied to the colloid solution. The EPD also needs a high driving voltage so as to display color, characters, or pictures by moving minute nano particles toward a cathode or an anode. The cholesteric LCD uses liquid crystal, in which each of layers of molecules arranged on a plane rotates in a spiral pattern and a cycle of spiral rotation varies according to a voltage applied to the liquid crystal. The cholesteric LCD also needs a high driving voltage to reflect light or allow light to pass therethrough by changing the direction of an axis of an internal spiral structure. As described above, in general, reflective displays need a high driving voltage and thus need a pixel circuit capable of outputting a high driving voltage.

### SUMMARY

According to an example embodiment, a pixel circuit for driving a display unit includes a plurality of capacitive devices, a first switching device and a second switching device. The plurality of capacitive devices are configured to apply a driving voltage to the display unit. The first switching device is configured to selectively supply a data signal to a first capacitive device of the plurality of capacitive devices based on a first scan signal. The second switching device is configured to selectively supply the data signal to a second capacitive device of the plurality of capacitive devices based on a second scan signal.

According to an example embodiment, the first capacitive device is charged according to the data signal during a first logic high period of the first scan signal, and the second capacitive device is charged according to the data signal when the first logic high period of the first scan signal ends and a first logic high period of the second scan signal starts.

According to an example embodiment, the first and second switching devices are switched off and the driving voltage is applied to the display unit at the end of the first logic high period of the second scan signal.

According to an example embodiment, the first capacitive device and the second capacitive device are connected in series, and one end of the first capacitive device is connected to the display unit.

According to an example embodiment, the first switching device includes a gate of the first switching device to which the first scan signal is supplied, a first electrode of the first switching device to which the data signal is supplied, and a second electrode of the first switching device connected to a first electrode of the first capacitive device

According to an example embodiment, the second switching device includes a gate of the second switching device to which the second scan signal is supplied, a first electrode of the second switching device to which the data signal is supplied, and a second electrode of the second switching device connected to a first electrode of the second capacitive device.

According to an example embodiment, the pixel circuit further includes a third switching device configured to selectively charge one of the first capacitive device and the second capacitive device based on the first scan signal.

According to an example embodiment, the third switching device includes a gate of the third switching device to which the first scan signal is supplied, a first electrode of the third switching device being commonly connected to a second electrode of the first capacitive device and a first electrode of the second capacitive device, and a second electrode of the third switching device connected to a second electrode of the second capacitive device.

According to an example embodiment, the second electrode of the third switching device is connected to ground.

According to an example embodiment, the display unit includes a pixel electrode connected to a first electrode of the first capacitive device, and an opposite electrode connected to a common power supply voltage source. The second electrode of the third switching device is connected to the common power supply voltage source.

According to an example embodiment, the pixel circuit further includes a third switching device configured to selectively supply the data signal to a third capacitive device of the plurality of capacitive devices based on a third scan signal.

According to an example embodiment, the first capacitive device is charged according to the data signal during a first logic high period of the first scan signal. The second capacitive device is charged according to the data signal when the first logic high period of the first scan signal ends and a first logic high period of the second scan signal starts. The third capacitive device is charged according to the data signal when the first logic high period of the second scan signal ends and a first logic high period of the third scan signal starts.

According to an example embodiment, the first, second and third switching devices are switched off and the driving voltage is applied to the display unit at the end of the first logic high period of the third scan signal.

According to an example embodiment, the first capacitive device, the second capacitive device, and the third capacitive device are connected in series, and one end of the first capacitive device is connected to the display unit.

According to an example embodiment, the first switching device includes a gate of the first switching device to which the first scan signal is supplied, a first electrode of the first switching device to which the data signal is supplied, and a second electrode of the first switching device connected to a first electrode of the first capacitive device.

According to an example embodiment, the second switching device includes a gate of the second switching device to which the second scan signal is supplied, a first electrode of the second switching device to which the data signal is supplied, and a second electrode of the second switching device connected to a first electrode of the second capacitive device.

According to an example embodiment, the third switching device includes a gate of the third switching device to which the third scan signal is supplied, a first electrode of the third switching device to which the data signal is supplied, and a second electrode of the third switching device connected to a first electrode of the third capacitive device.

According to an example embodiment, the pixel circuit further includes a fourth switching device configured to selectively charge one of the first capacitive device and the second capacitive device based on the first scan signal, and a fifth switching device configured to selectively charge one of the second capacitive device and the third capacitive device based on the second scan signal.

According to an example embodiment, the fourth switching device includes a gate of the fourth switching device to which the first scan signal is supplied, a first electrode of the fourth switching device being commonly connected to a second electrode of the first capacitive device and a first electrode of the second capacitive device, and a second electrode of the fourth switching device connected to ground

According to an example embodiment, the fifth switching device includes a gate of the fifth switching device to which the second scan signal is supplied, a first electrode of the fifth switching device being commonly connected to a second electrode of the second capacitive device and a first electrode of the third capacitive device, and a second electrode of the fifth switching device connected to ground.

According to an example embodiment, a pixel circuit is operated to drive a display unit. The pixel unit includes a first switching device, a second switching device and a third switching device. The first switching device includes a gate of the first switching device to which a first scan signal is supplied, a first electrode of the first switching device to which a data signal is supplied and a second electrode of the first switching device connected to a first electrode of a first capacitive device. The second switching device includes a gate of the second switching device to which a second scan signal is supplied, a first electrode of the second switching device to which the data signal is supplied, and a second electrode of the second switching device connected to a first electrode of a second capacitive device. The third switching device includes a gate of the third switching device to which the first scan signal is supplied, a first electrode of the third switching device being commonly connected to a second electrode of the first capacitive device and a first electrode of the second capacitive device, and a second electrode of the third switching device being commonly connected to a second electrode of the second capacitive device and a common power supply voltage source. The display unit is connected between the first electrode of the first capacitive device and the common power supply voltage source,

The method includes generating the first scan signal such that the first switching device and the third switching device are on during a first time period, and generating the second scan signal such that the second switching device is on during a second time period. The first and second scan signals are generated such that the first, second and third switching devices are off during a third time period.

According to an example embodiment, the method further includes maintaining the common power supply voltage source at a first logic level during the first and second time periods, and switching the common power supply voltage source to a second logic level higher than the first logic level during the third time period.

According to an example embodiment, the method further includes maintaining the common power supply voltage source at a first logic level during the first and second time periods, and switching the common power supply voltage source to a second logic level lower than the first logic level during the third time period.

According to an example embodiment, the method further includes charging the first capacitance device during the first time period, charging the second capacitance device during the second time period, and supplying the charges of the first and second capacitance devices to the display unit during the third time period.

According to an example embodiment, the method further includes maintaining a logic level of the data signal during the first and second time periods.

### BRIEF DESCRIPTION OF THE DRAWINGS

Example embodiments will be more clearly understood from the following brief description taken in conjunction with the accompanying drawings. FIGS. 1-8 represent non-limiting, example embodiments as described herein.
FIG. 1 is a circuit diagram of a pixel circuit according to an example embodiment;
FIG. 2 is a schematic block diagram of a display device employing a plurality of pixel circuits illustrated in FIG. 1, according to an example embodiment;
FIG. 3 is a waveform diagram of a data signal, a first scan signal, and a second scan signal for driving the pixel circuit of FIG. 1, according to an example embodiment;
FIG. 4A is a circuit diagram of a pixel circuit according to another example embodiment;
FIG. 4B is a graph showing a result of a simulation of the pixel circuit of FIG. 4A;
FIG. 4C is a graph comparing reflectivities measured when a same data signal is supplied to a polymer dispersed liquid crystal (PDLC) display manufactured using a pixel circuit according to a related art and a PDLC display manufactured using the pixel circuit of FIG. 4A;
FIG. 5 is a schematic block diagram of a display device employing a plurality of pixel circuits illustrated in FIG. 4A, according to another example embodiment;
FIGS. 6A and 6B are waveform diagrams of a data signal, a first scan signal, a second scan signal, and a common power supply voltage for driving the pixel circuit of FIG. 4A, according to an example embodiment;
FIG. 7 is a circuit diagram of a pixel circuit according to another example embodiment; and
FIG. 8 is a waveform diagram of a data signal, a first scan signal, a second scan signal, and a third scan signal for driving the pixel circuit of FIG. 7, according to another example embodiment.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. For example, the relative thicknesses and positioning of molecules, layers, regions and/or structural elements may be reduced or exaggerated for clarity. The use of similar or identical reference numbers in the various drawings is intended to indicate the presence of a similar or identical element or feature.

### DETAILED DESCRIPTION

Example embodiments will now be described more fully with reference to the accompanying drawings, in which example embodiments are shown. Example embodiments may, however, be embodied in many different forms and should not be construed as being limited to the embodiments set forth herein; rather, these embodiments are provided so that this disclosure will be thorough and complete, and will fully convey the concept of example embodiments to those of ordinary skill in the art. In the drawings, the thicknesses of layers and regions are exaggerated for clarity. Like reference numerals in the drawings denote like elements, and thus their description will be omitted.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Like numbers indicate like elements throughout. As used herein the term "and/or" includes any and all combinations of one or more of the associated listed items. Other words used to describe the relationship between elements or layers should be interpreted in a like fashion (e.g., "between" versus "directly between," "adjacent" versus "directly adjacent," "on" versus "directly on").

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises", "comprising", "includes" and/or "including," if used herein, specify the presence of stated features, integers, steps, operations, elements and/or components, but do not preclude the presence or addition of one or more other features, integers, steps, operations, elements, components and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle may have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of example embodiments.

Unless otherwise defined, all terms (including technical and scientific terms) used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

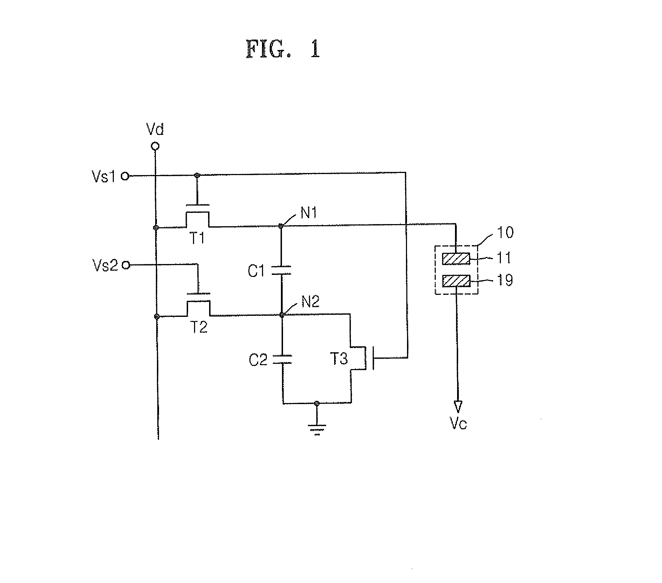

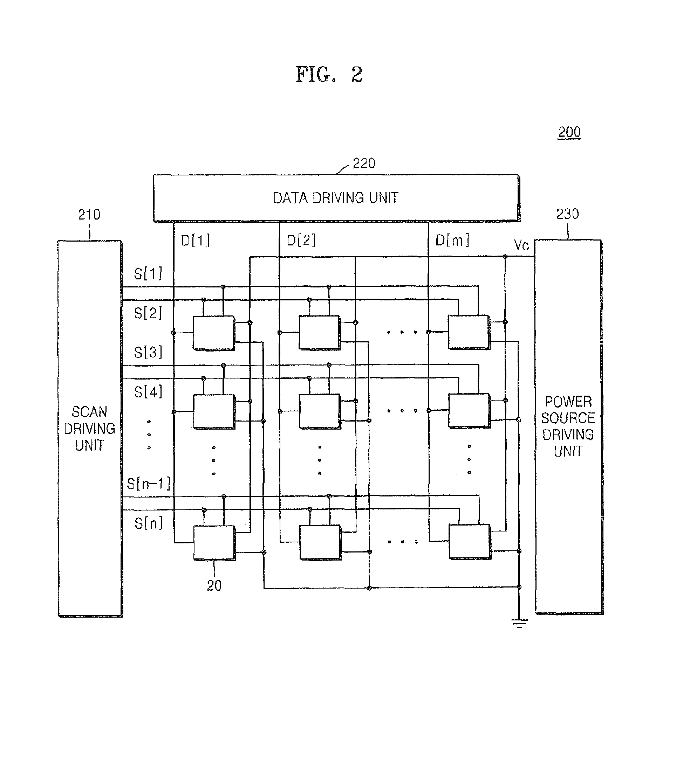

FIG. 1 is a circuit diagram of a pixel circuit according to an example embodiment. FIG. 2 is a schematic block diagram of a display device 200 employing a plurality of pixel circuits illustrated in FIG. 1, according to an example embodiment. Referring to FIG. 1, the pixel circuit drives a display unit 10 and may include first to third transistors T1, T2, and T3 and first and second capacitors C1 and C2. The pixel circuit illustrated in FIG. 1 is coupled to each of pixels 20 included in the display device 200 of FIG. 2.

The display unit 10 includes a pixel electrode 11, an opposite electrode 19, and a display material contained between the pixel electrode 11 and the opposite electrode 19. The display material may be, for example, liquid crystal, charged particles, or an electrochromic material. A pixel is displayed when a voltage or current is applied between the pixel electrode 11 and the opposite electrode 19. The opposite electrode 19 is connected to a common power supply voltage Vc source of a plurality of pixels. Also, the display unit 10 may be used in a reflective display to display a pixel when a voltage is applied to the display material. In this case, a high driving voltage is needed.

A pixel circuit, according to an example embodiment, may output a high voltage for driving a display unit by using a conventional driver. In a conventional pixel circuit, either a high output voltage cannot be maintained constant or a transistor acting as a switching device in the conventional pixel circuit is turned on during light emission of a display unit that occupies most of a driving frame of the conventional pixel circuit, thereby lowering the reliability of the conventional pixel circuit. The pixel circuit according to an example embodiment may output a high voltage at a constant level and the reliability of the pixel circuit is higher.

Referring back to FIG. 1, a data signal Vd is supplied to a first electrode of the first transistor T1. Referring to FIG. 2, a first electrode of each first transistor T1 is connected to a data line D[m] from among a plurality of data lines arranged in columns. A second electrode of the first transistor T1 is connected to a first node N1. A first scan signal Vs1 is supplied to a gate electrode of the first transistor T1. Referring to FIG. 2, a gate electrode of each first transistor T1 is connected to a scan line S[n-1] from among a plurality of scan lines arranged in rows. Thus, the first transistor T1 switches the data signal Vd to be supplied to the first node N1 according to the first scan signal Vs1. If the first scan signal Vs1 is logic high, the first transistor T1 is switched on to supply the data signal Vd to the first node N1. If the first scan signal Vs1 is logic low, the first transistor T1 is switched off.

The data signal Vd is also supplied to a first electrode of the second transistor T2. Referring to FIG. 2, a first electrode of each second transistor T2 is connected to the data line D[m] to which the first electrode of the corresponding first transistor T1 is connected. A second electrode of the second transistor T2 is connected to a second node N2. A second scan signal Vs2 is supplied to a gate electrode of the second transistor T2. Referring to FIG. 2, a gate electrode of each second transistor T2 is connected to a different scan line S[n] from the scan line S[n-1] to which the gate electrode of the corresponding first transistor T1 is connected. That is, each of the pixels 20 is connected to one data line and two scan lines. Thus, the second transistor T2 switches the data signal Vd to be supplied to the second node N2 according to the second scan signal Vs2. If the second scan signal Vs2 is logic high, the second transistor T2 is switched on to supply the data signal Vd to the second node N2. If the second scan signal Vs2 is logic low, the second transistor T2 is switched off.

A first electrode and second electrode of the third transistor T3 are respectively connected to the second node N2 and ground. The first scan signal Vs1 is also supplied to a gate electrode of the third transistor T3. Referring to FIG. 2, a gate electrode of each third transistor T3 is connected to the scan line S[n-1] to which the corresponding first transistor T1 is connected. Thus, the third transistor T3 controls the amount of current flowing between the second node N2 and ground according to the first scan signal Vs1. If the first scan signal Vs1 is logic high, the third transistor T3 is switched on to ground the second node N2. If the first scan signal Vs1 is logic low, the third transistor T3 is switched off.

A first capacitor C1 is connected between the first node N1 and the second node N2, and is thus charged with electric charges according to the difference between voltages of the first node N1 and the second node N2. A second capacitor C2 is connected between the second node N2 and ground and is thus charged with electric charges according to the voltage of the second node N2.

The operating characteristics of the pixel circuit of FIG. 1 will now be described. First, the first scan signal Vs1 that is logic high is supplied to the gate electrode of the first transistor T1 of the pixel circuit illustrated in FIG. 1. Then, the first transistor T1 is switched on to supply the data signal Vd to the first node N1. In this case, the third transistor T3 having the gate electrode to which the first scan signal Vs1 that is logic high is also supplied, is also switched on to ground the second node N2. Thus, the first capacitor C1 is charged with electric charges. It is assumed that a time period in which the first scan signal Vs1 that is logic high is supplied to the first transistor T1 is sufficient for the first capacitor C1 to be charged with electric charges corresponding to the voltage of the data signal Vd.

After the charging of the first capacitor C1 is completed, the first scan signal Vs1 is logic low, and the second scan signal Vs2 that is logic high is supplied to the gate electrode of the second transistor T2. Then, the second transistor T2 is switched on to supply the data signal Vd to the second node N2. If it is assumed that a time period in which the second scan signal Vs2 is maintained logic high is sufficient for the second capacitor C2 to be charged with electric charges corresponding to the voltage of the data signal Vd, then the second capacitor C2 is charged in such a manner that a voltage that is equal to the voltage of the data signal Vd is applied across the second capacitor C2.

Lastly, if both the first and second scan signals Vs1 and Vs2 are logic low, all the first to third transistors T1, T2, and T3 are switched off. Also, since the first capacitor C1 and the second capacitor C2, each of which are charged with the electric charges corresponding to as the voltage of the data signal Vd, are connected in series, the voltage of the first node N1 is twice that of the data signal Vd. The voltage of the first node N1 is applied to the pixel electrode 11 of the display unit 10, thus driving the display unit 10.

In the example embodiment, it is assumed that two capacitive devices are used to be charged with a driving voltage to be applied to the display unit 10, but three or more capacitive devices may be used to obtain a high driving voltage.

Referring to FIG. 2, the display device 200 employing a plurality of pixel circuits illustrated in FIG. 1 includes a scan driving unit 210 that supplies a scan signal to a plurality of scan lines S[n], a data driving unit 220 that supplies a data signal to a plurality of data lines D[m], and a power source driving unit 230 that supplies a common power supply voltage Vc. The plurality of pixels 20 are disposed at intersections of the plurality of scan lines S[n] and the plurality of data lines D[m]. Each of the plurality of pixels 20 includes the pixel circuit of FIG. 1. The pixel circuit of each of the plurality of pixels 20 uses two scan signals, and two scan lines are assigned to each of the plurality of pixels 20.

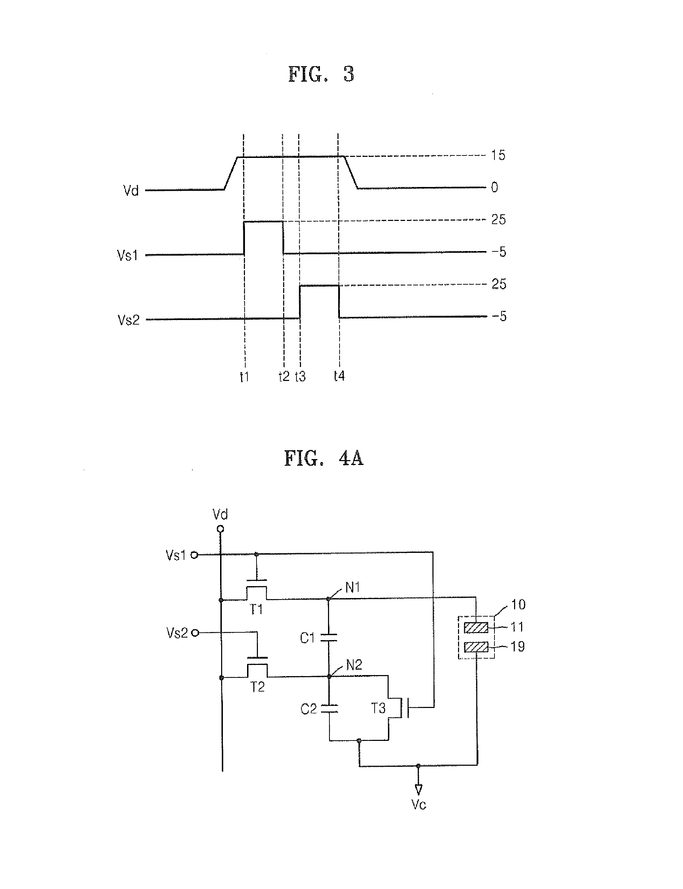

FIG. 3 is a waveform diagram of a data signal Vd, a first scan signal Vs1, and a second scan signal Vs2 for driving the pixel circuit of FIG. 1, according to an example embodiment. A method of driving the pixel circuit of FIG. 1 will now be described with reference to FIG. 3. In the example embodiment, the data signal Vd is set to have a voltage of about 0 V to about 15 V, and the first and second scan signals Vs1 and Vs2 are set to have a voltage from about -5 V to about 25 V so that the first and second transistors T1 and T2 may act appropriately as switching devices, in consideration of the range of the voltage of the first node N1.

Referring to FIG. 3, the first scan signal Vs1 is a pulse signal having a maximum voltage of about 25 V in a time period t1 to t2, the second scan signal Vs2 is a pulse signal having a maximum voltage of about 25 V in a time period t3 to t4, and a voltage of the data signal Vd is maintained constant at about 15 V from before the point of time t1 and to after the point of time t4. The operations of the elements of the pixel circuit illustrated in FIG. 1 will now be described.

In the time period t1 to t2, the first transistor T1 is switched on, the data signal Vd of about 15 V is supplied to the first node N1, and the first capacitor C1 is thus charged with electric charges. Since the third transistor T3 is also switched on in the time period t1 to t2, the second node N2 is grounded and a voltage across the ends of the first capacitor C1 is about 15 V which is equal to the voltage of the data signal Vd. It is assumed that the time period t1 to t2 is sufficient for the first capacitor C1 to be fully charged.

In the time period t3 to t4, the first and third transistors T1 and T3 are switched off and only the second transistor T2 is switched on, and about 15 V is thus applied to the second node N2. Since one end of the second capacitor C2 is connected to the second node N2 and the other end thereof is grounded, the voltage across the ends of the second capacitor C2 is about 15 V in the time period t3 to t4. After the point of time t4, all the first to third transistors T1 to T3 are switched off and a voltage across the ends of the first and second capacitors C1 and C2 is about 15 V.

Thus, an electric potential of the first node N1 is about 30 V that is twice the voltage of the data signal Vd. That is, if a voltage applied to the display unit 10 is Vp, then Vp=2Vd. Thus, the display unit 10 may be driven with a voltage that is twice a maximum voltage of the data signal Vd. Accordingly, it is possible to drive a reflective display that needs a high driving voltage by using a conventional driver without having to additionally use a new driver.

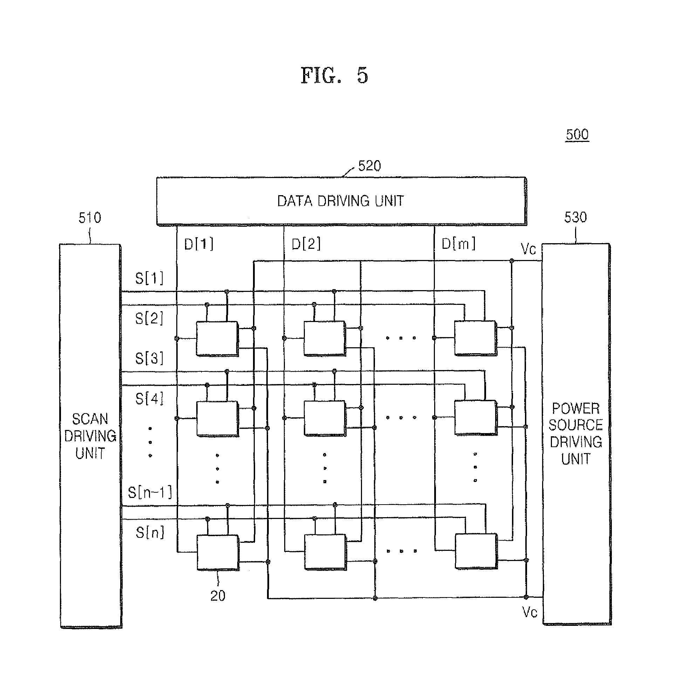

FIG. 4A is a circuit diagram of a pixel circuit that drives a display unit 10, according to another example embodiment. FIG. 5 is a schematic block diagram of a display device 500 employing a plurality of pixel circuits illustrated in FIG. 4A, according to another example embodiment. Referring to FIG. 4A, the pixel circuit may include first to third transistors T1, T2, and T3, and first and second capacitors C1 and C2. The pixel circuit illustrated in FIG. 4A is coupled to each of pixels 20 included in the display device 500 of FIG. 5.

The display unit 10 includes a pixel electrode 11, an opposite electrode 19, and a display material contained between the pixel electrode 11 and the opposite electrode 19. The display material may be, for example, liquid crystal, charged particles, or an electrochromic material. A pixel may be displayed when a voltage or current is applied between the pixel electrode 11 and the opposite electrode 19. The opposite electrode 19 is connected to a common power supply voltage Vc source of a plurality of pixels. Also, the display unit 10 may be used in a reflective display to display a pixel when a voltage is applied to the display material. In this case, a high driving voltage is needed.

A data signal Vd is supplied to a first electrode of the first transistor T1. Referring to FIG. 5, a first electrode of each first transistor T1 is connected to a data line D[m] from among a plurality of data lines arranged in columns. A second electrode of the first transistor T1 is connected to a first node N1. A first scan signal Vs1 is supplied to a gate electrode of the first transistor T1. Referring to FIG. 5, a gate electrode of each first transistor T1 is connected to a scan line S[n-1] from among a plurality of scan lines arranged in rows. Thus, the first transistor T1 switches the data signal Vd to be supplied to the first node N1 according to the first scan signal Vs1. If the first scan signal Vs1 is logic high, the first transistor T1 is switched on to supply the data signal Vd to the first node N1. If the first scan signal Vs1 is logic low, the first transistor T1 is switched off.

The data signal Vd is also supplied to a first electrode of the second transistor T2. Referring to FIG. 5, a first electrode of each second transistor T2 is connected to the data line D[m] to which the first electrode of the corresponding first transistor T1 is connected. A second electrode of the second transistor T2 is connected to a second node N2. A second scan signal Vs2 is supplied to a gate electrode of the second transistor T2. Referring to FIG. 5, a gate electrode of each second transistor T2 is connected to a different scan line S[n] from the scan line S[n-1] to which the gate electrode of the corresponding first transistor T1 is connected. That is, each of the pixels 20 is connected to one data line and two scan lines. Thus, the second transistor T2 switches the data signal Vd to be supplied to the second node N2 according to the second scan signal Vs2. If the second scan signal Vs2 is logic high, the second transistor T2 is switched on to supply the data signal Vd to the second node N2. If the second scan signal Vs2 is logic low, the second transistor T2 is switched off.

A first electrode and second electrode of the third transistor T3 are connected to the second node N2 and the common power supply voltage Vc source, respectively. The first scan signal Vs1 is supplied to a gate electrode of the third transistor T3. Referring to FIG. 5, a gate electrode of each third transistor T3 is connected to the scan line S[n-1] to which the corresponding first transistor T1 is connected. Thus, the third transistor T3 controls the amount of current flowing between the second node N2 and the common power supply voltage Vc source according to the first scan signal Vs1. If the first scan signal Vs1 is logic high, the third transistor T3 is switched on to connect the second node N2 to the common power supply voltage Vc source. If the first scan signal Vs1 is logic low, the third transistor T3 is switched off.

A first capacitor C1 is connected between the first node N1 and the second node N2, and is thus charged with electric charges according to the difference between voltages of the first node N1 and the second node N2. A second capacitor C2 is connected between the second node N2 and the common power supply voltage Vc source and is thus charged with electric charges according to the difference between voltages of the second node N2 and the common power supply voltage Vc source.

The operating characteristics of the pixel circuit of FIG. 4A will now be described. First, the first scan signal Vs1 that is logic high is supplied to the gate electrode of the first transistor T1 of the pixel circuit illustrated in FIG. 4A. Then, the first transistor T1 is switched on to supply the data signal Vd to the first node N1. In this case, the third transistor T3 having the gate electrode to which the first scan signal Vs1 that is logic high is supplied, is also switched on to connect the second node N2 to the common power supply voltage Vc source. Thus, if it is assumed that a time period in which the first scan signal Vs1 is supplied to the first transistor T1 is sufficient for the first capacitor C1 to be charged with electric charges, the first capacitor C1 is charged in such a manner that the difference between voltages of both ends of the first capacitor C1 may be (Vd-Vc).

After the charging of the first capacitor C1 is completed, the first scan signal Vs1 is logic low, and the second scan signal Vs2 that is logic high is supplied to the gate electrode of the second transistor T2. Then, the second transistor T2 is switched on to supply the data signal Vd to the second node N2. If it is assumed that a time period in which the second scan signal Vs2 is maintained logic high is sufficient for the second capacitor C2 to be charged with electric charges, then the second capacitor C2 is charged in such a manner that the difference between voltages of both ends of the second capacitor C2 may be (Vd-Vc).

Lastly, if both the first and second scan signals Vs1 and Vs2 are logic low, all the first to third transistors T1, T2, and T3 are switched off. Also, since the first capacitor C1 and the second capacitor C2, which are each charged so that the difference between the voltages of both ends thereof may be (Vd-Vc), are connected in series, the voltage of the first node N1 is 2(Vd-Vc)+Vc, i.e., 2Vd-Vc. The voltage of the first node N1 is applied to the pixel electrode 11 of the display unit 10, thus driving the display unit 10.

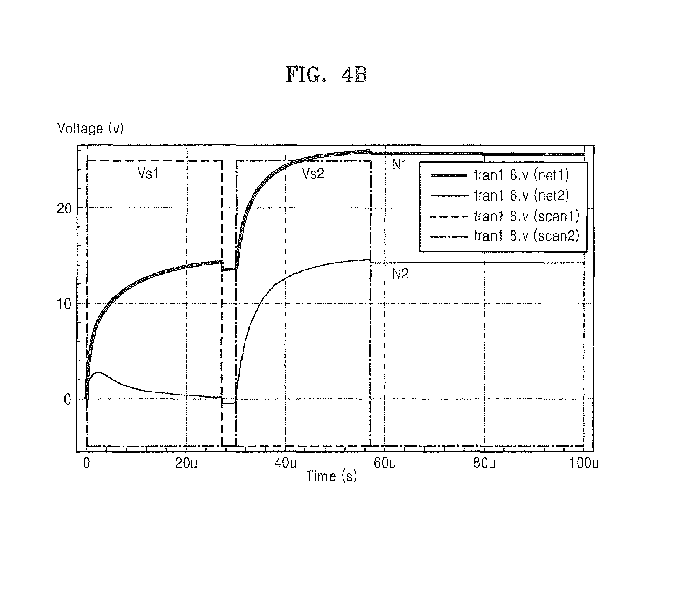

FIG. 4B is a graph showing a result of a simulation of the pixel circuit of FIG. 4A. When the first scan signal Vs1 is logic high, the data signal Vd is supplied to the first node N1 and the common power supply voltage Vc is supplied to the second node N2. Then, if the second scan signal Vs2 is logic high, the data signal Vd is supplied to the second node N2 and a voltage (2Vd-Vc) is thus applied to the first node N1.

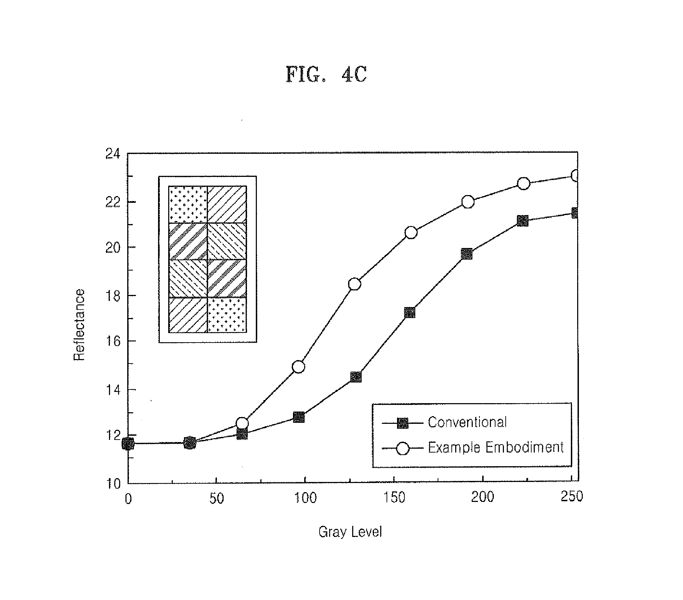

FIG. 4C is a graph comparing reflectivities measured when a same data signal is supplied to a polymer dispersed liquid crystal (PDLC) display manufactured using a pixel circuit according to a related art and to a PDLC display manufactured using the pixel circuit of FIG. 4A. Referring to FIG. 4C, a high driving voltage may be applied to the PDLC display when the pixel circuit of FIG. 4A is used. Thus, the reflectivities measured when the pixel circuit of FIG. 4A is used are higher than when the pixel circuit according to the related art is used.

Referring to FIG. 5, the display device 500 employing the plurality of pixel circuits illustrated in FIG. 4A may include a scan driving unit 510 that supplies a scan signal to a plurality of scan lines S[n], a data driving unit 520 that supplies a data signal to a plurality of data lines D[m], and a power source driving unit 530 that supplies a common power supply voltage Vc. The plurality of pixels 20 are disposed at intersections of the plurality of scan lines S[n] and the plurality of data lines D[m]. Each of the plurality of pixels 20 includes the pixel circuit of FIG. 4A. Since the pixel circuit of each of the plurality of pixels 20 needs two scan signals, two scan lines are assigned to each of the plurality of pixels 20.

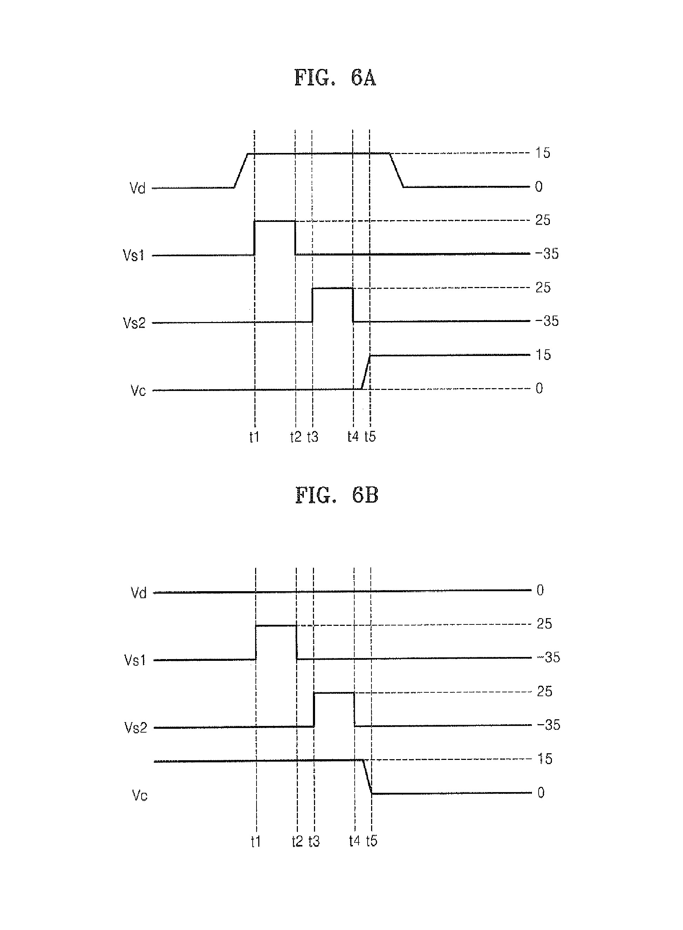

FIGS. 6A and 6B are waveform diagrams of a data signal Vd, a first scan signal Vs1, a second scan signal Vs2, and a common power supply voltage Vc for driving the pixel circuit of FIG. 4A, according to an example embodiment. A method of driving the pixel circuit of FIG. 4A will now be described above with reference to FIGS. 6A and 6B. In the example embodiment, inversion driving is performed, in which the polarity of a voltage to be applied to display unit is changed in units of frames. Also, in the example embodiment, a voltage of the data signal Vd and the common power supply voltage Vc are set to range from about 0 V to about 15 V, and the first and second scan signal Vs1 and Vs2 are set to range from about -35 V to about 25 V so that the first and second transistors T1 and T2 may act appropriately as switching devices, in consideration of the range of the voltage of the first node N1.

Referring to FIG. 6A, the first scan signal Vs1 has a maximum voltage of about 25 V in a time period t1 to t2 and has a minimum voltage of about -35 V in the other time periods. The second scan signal Vs2 has a maximum voltage of about 25 V in a time period t3 to t4 and has a minimum voltage of about -35 V in the other time periods. A voltage of the data signal Vd is maintained constant at about 15 V from before the point of time t1 and to after the point of time t4. The common power supply voltage Vc increases from about 0 V after the point of time t4 and is maintained at about 15 V after a point of time t5.

The operations of the elements of the pixel circuit of FIG. 4A will now be described. Since the first transistor T1 is switched on in the time period t1 to t2, the data signal Vd of about 15 V is applied to the first node N1 and the first capacitor C1 is thus charged with electric charges. Since in the time period t1 to t2, the third transistor T3 is also switched on, the second node N2 is connected to the common power supply voltage Vc source and a voltage between both ends of the first capacitor C1 is charged with about 15 V that is the difference between the voltage of the data signal Vd and the common power supply voltage Vc. That is, at the point of time t2, voltage across the first capacitor C1 is (Vd-Vc). In the time period t3 to t4, the first and third transistors T1 and T3 are switched off and only the second transistor T2 is switched on and about 15 V is thus applied to the second node N2. Thus, the second capacitor C2 connected between the second node N2 and the common power supply voltage Vc is charged with the voltage (Vd-Vc). In other words, in the example embodiment, about 15 V is applied across the second capacitor C2. A voltage Vp applied to the pixel electrode 11 of the display unit 10 after the point of time t4 is the sum of voltages applied across the first and second capacitors C1 and C2 and the common power supply voltage Vc. That is, Vp=2Vd-Vc. Accordingly, about 30 V is applied to the pixel electrode 11 of the display unit 10 right after the point of time t4.

Since the voltage applied to both ends of the display unit 10 is 2(Vd-Vc), - 15≤Vd-Vc≤15 when this voltage needs to swing in the range of about -30 V to 30 V. If the range of the voltage of the data signal Vd is 0≤Vd≤15 as in the example embodiment, the range of the common power supply voltage Vc should satisfy 0≤Vc≤15. Accordingly, in the example embodiment, the range of the common power supply voltage Vc is set to satisfy 0≤Vc≤15.

Referring back to FIG. 6A, the common power supply voltage Vc is maintained constant at a minimum level, for example, 0 V, in the time period t1 to t4, increases after the point of time t4, and reaches a maximum level, for example, about 15 V, at the point of time t5. Thus, the voltage of the first node N1 applied to the pixel electrode 11 of the display unit 10 after the point of time t5 is about 45 V. About 45 V is a maximum voltage that may be applied to the pixel electrode 11 of the display unit 10.

Referring to FIG. 6B, the first scan signal Vs1 has a maximum voltage of about 25 V in the time period t1 to t2 and has a minimum voltage of about -35 V in the other time periods. The second scan signal Vs2 has a maximum voltage of about 25 V in the time period t3 to t4 and has a minimum voltage of about -35 V in the other time periods. The voltage of the data signal Vd is maintained constant at 0 V from before the point of time t1 and to after the point of time t4. The common power supply voltage Vc reduces from about 15 V after the point of time t4 and is maintained constant at 0 V starting from the point of time t5.

Referring to FIG. 4A, since the first transistor T1 is switched on in the time period t1 to t2, the data signal Vd of 0 V is applied to the first node N1 and the first capacitor C1 is thus charged with electric charges. Since in the time period t1 to t2, the third transistor T3 is also switched on, the second node N2 is connected to the common power supply voltage Vc and voltage across the first capacitor C1 is about -15 V that is equal to the difference between the voltage of the data signal Vd and the common power supply voltage Vc. That is, the voltage across the first capacitor C1 at the point of time t2 is (Vd-Vc). In the time period t3 to t4, the first and third transistors T1 and T3 are switched off and only the second transistor T2 is switched on. 0 V is thus applied to the second node N2. Thus, voltage across the second capacitor C2 connected between the second node N2 and the common power supply voltage Vc is the voltage (Vd-Vc). That is, in the example embodiment, voltage across the second capacitor C2 is about -15 V. A voltage Vp applied to the pixel electrode 11 of the display unit 10 after the point of time t4 is the sum of voltages across the first and second capacitors C1 and C2 and the common power supply voltage Vc. That is, Vp=2Vd-Vc. Accordingly, about -15 V is applied to the pixel electrode 11 of the display unit 10 right after the point of time t4.

Thereafter, the common power supply voltage Vc, maintained constant at a maximum level, for example, about 15 V, in the time period t1 to t4, reduces after the point of time t4, and is maintained at a minimum level, for example, 0 V, starting from the point of time t5. Thus, the voltage of the first node N1 applied to the pixel electrode 11 of the display unit 10 after the point of time t5 is about -30 V. About - 30 V is a minimum voltage that may be applied to the pixel electrode of the display unit 10.

As described above, inversion driving in which the voltage to be applied to both ends of the display unit 10 may range from about -30 V to about 30 V, may be performed by applying the data signal Vd and the common power supply voltage Vc, which swing in the range of about 0 V to about 15 V, to the pixel circuit of FIG. 4A.

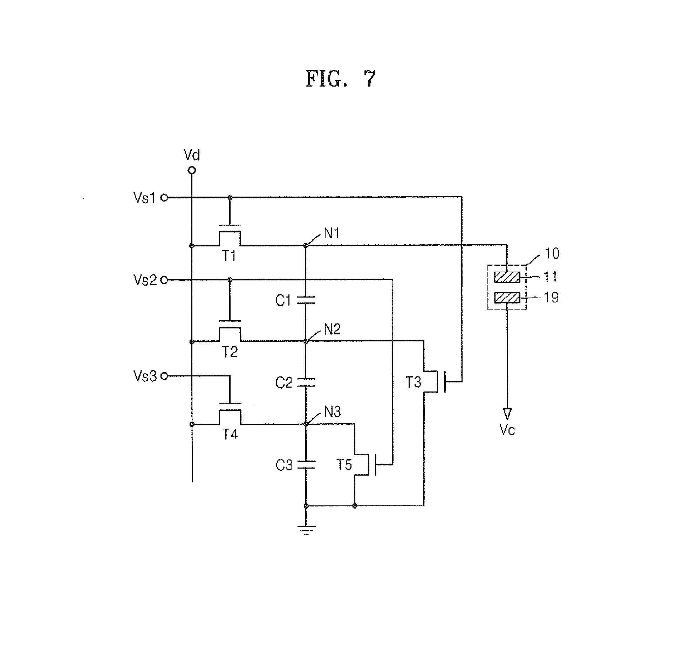

FIG. 7 is a circuit diagram of a pixel circuit according to another example embodiment. Referring to FIG. 7, the pixel circuit may include first to fifth transistors T1, T2, T3, T4, and T5 and first to third capacitors C1, C2, and C3.

Referring to FIG. 7, a data signal Vd is supplied to a first electrode of the first transistor T1. A second electrode of the first transistor T1 is connected to a first node N1. A first scan signal Vs1 is supplied to a gate electrode of the first transistor T1. Thus, when the first transistor T1 switches, the data signal Vd is supplied to the first node N1 according to the first scan signal Vs1. If the first scan signal Vs1 is logic high, the first transistor T1 is switched on to supply the data signal Vd to the first node N1. If the first scan signal Vs1 is logic low, the first transistor T1 is switched off.

The data signal Vd is supplied to a first electrode of the second transistor T2. A second electrode of the second transistor T2 is connected to a second node N2. A second scan signal Vs2 is supplied to a gate electrode of the second transistor T2. Thus, when the second transistor T2 switches, the data signal Vd is supplied to the second node N2 according to the second scan signal Vs2. If the second scan signal Vs2 is logic high, the second transistor T2 is switched on to supply the data signal Vd to the second node N2. If the second scan signal Vs2 is logic low, the second transistor T2 is switched off.

A first electrode and a second electrodes of the third transistor T3 are respectively connected to the second node N2 and ground. The first scan signal Vs1 is supplied to a gate electrode of the third transistor T3. Thus, the third transistor T3 controls the amount of current flowing between the second node N2 and ground according to the first scan signal Vs1. If the first scan signal Vs1 is logic high, the third transistor T3 is switched on to ground the second node N2. If the first scan signal Vs1 is logic low, the third transistor T3 is switched off.

The data signal Vd is supplied to a first electrode of the fourth transistor T4. A second electrode of the fourth transistor T4 is connected to a third node N3. A third scan signal Vs3 is supplied to a gate electrode of the fourth transistor T4. Thus, when the fourth transistor T4 switches, the data signal is supplied to the third node N3 according to the third scan signal Vs3. If the third scan signal Vs3 is logic high, the fourth transistor T4 is switched on to supply the data signal Vd to the third node N3. If the third scan signal Vs3 is logic low, the fourth transistor T4 is switched off.

First and second electrodes of the fifth transistor T5 are respectively connected to the third node N3 and ground. The second scan signal Vs2 is supplied to a gate electrode of the fifth transistor T5. Thus, the fifth transistor T5 controls the amount of current flowing between the third node N3 and ground according to the second scan signal Vs2. If the second scan signal Vs2 is logic high, the fifth transistor T5 is switched on to ground the third node N3. If the second scan signal Vs2 is logic low, the fifth transistor T5 is switched off.

The first capacitor C1 is connected between the first node N1 and the second node N2 and is charged with electric charges according to the difference between voltages of the first node N1 and the second node N2. The second capacitor C2 is connected between the second node N2 and the third node N3 and is charged with electric charges according to the difference between voltages of the second node N2 and the third node N3. The third capacitor C3 is connected between the third node N3 and ground and is charged with electric charges according to a voltage of the third node N3.

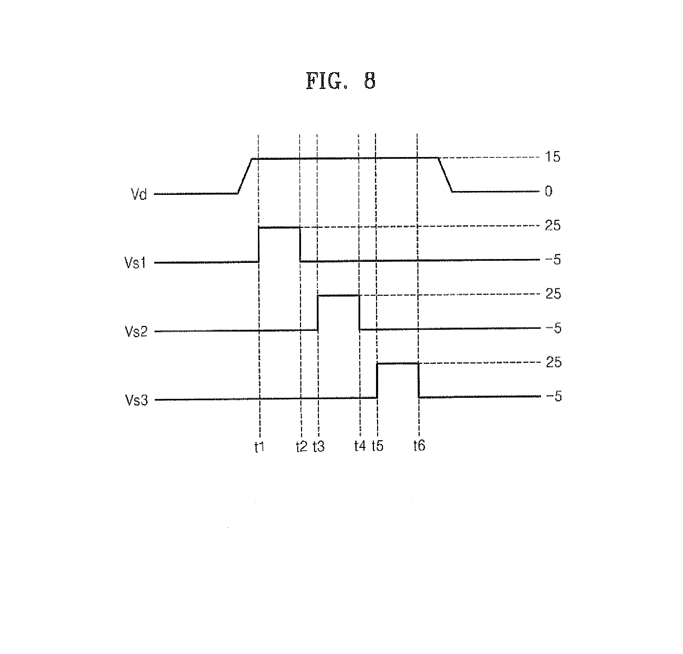

FIG. 8 is a waveform diagram of a data signal Vd, a first scan signal Vs1, a second scan signal Vs2, and a third scan signal Vs3 for driving the pixel circuit of FIG. 7, according to another example embodiment. A method of driving the pixel circuit of FIG. 7 will now be described with reference to FIG. 8. In the example embodiment, the data signal Vd is set to have a voltage from about 0 V to about 15 V, and the first to third scan signal Vs1, Vs2, and Vs3 are set to have a voltage of about -5 V to about 25 V so that the first to fifth transistors T1, T2, T3, T4, and T5 may act appropriately as switching devices, in consideration of the range of the voltage of the first node N1.

Referring to FIG. 8, the first scan signal Vs1 is a pulse signal having a maximum voltage of about 25 V in a time period t1to t2, the second scan signal Vs2 is a pulse signal having a maximum voltage of about 25 V in a time period t3 to t4, and the third scan signal Vs3 is a pulse signal having a maximum voltage of about 25 V in a time period t5 to t6. The data signal Vd is maintained constant at about 15 V from before the point of time t1 and to after the point of time t6. The operations of the elements of the pixel circuit of FIG. 7 will now be described.

In the time period t1 to t2, the first transistor T1 is switched on to apply the data signal Vd of about 15 V to the first node N1 and the first capacitor C1 is charged with electric charges. Since the third transistor T3 is also switched on in the time period t1 to t2, the second node N2 is grounded and a voltage between both ends of the first capacitor C1 is charged with about 15 V that is equal to the voltage of the data signal Vd. It is assumed that the time period t1 to t2 is sufficient for the first capacitor C1 to be fully charged.

In the time period t3 to t4, since the first, third, and fourth transistors T1, T3, and T4 are switched off and the second and fifth transistors T2 and T5 are switched on, about 15 V is applied to the second node N2 and the third node N3 is grounded. Thus, the voltage between both ends of the second capacitor C2 is charged with about 15 V in the time period t3 to t4.

In a time period t5 to t6, since only the fourth transistor T4 is switched on and the other transistors are switched off, about 15 V is applied to the third node N3 and the voltage between both ends of the third capacitor C3 is charged with about 15 V. After the point of time t6, all of the first to fifth transistors T1 to T5 are switched off and voltages between both ends of the first and second capacitors C1 and C2 are charged with about 15 V.

Thus, an electric potential of the first node N1 is about 45 V that is three times the maximum voltage of the data signal Vd. In other words, if a voltage applied to the display unit 10 is Vp, then Vp=3Vd and the display unit 10 may be driven with a voltage that is about three times the maximum voltage of the data signal Vd. Accordingly, a reflective display that needs a high driving voltage may be driven with a conventional driver without having to use a new driver.

As described above, according to the above example embodiments, a voltage that is twice that of a data signal may be applied to a display unit, and a reflective display that needs a high driving voltage may be driven even with a conventional driver. When transistors are used as switching devices, all the transistors are switched off during light emission of a display unit that occupies a most part of a frame, thereby improving the reliability of the display unit. Also, it is possible to perform inversion driving for preventing deformation of liquid crystal by switching a common power supply voltage within a desired (or, alternatively predetermined) range of voltage.

Example embodiments having thus been described, it will be obvious that the same may be varied in many ways.

## Claims

1. A pixel circuit for driving a display unit (10), the pixel circuit comprising:
a plurality of capacitive devices (C1,C2) configured to apply a driving voltage to the display unit;
a first switching device (T1) configured to selectively supply a data signal to a first capacitive device (C1) of the plurality of capacitive devices based on a first scan signal; and
a second switching device (T2) configured to selectively supply the data signal to a second capacitive device (C2) of the plurality of capacitive devices based on a second scan signal.

2. The pixel circuit of claim 1, wherein the first switching device (T1) is configured to charge the first capacitive device (C1) according to the data signal during a first logic high period of the first scan signal, and
the second switching device (T2) is configured to charge the second capacitive device (C2) according to the data signal when the first logic high period of the first scan signal ends and a first logic high period of the second scan signal starts,
and optionally wherein the circuit is configured to switch the first and second switching devices (T1,T2) off at the end of the first logic high period of the second scan signal when the driving voltage is applied to the display unit.

3. The pixel circuit of claim 1 or 2, wherein
the first capacitive device (C1) and the second capacitive device (C2) are connected in series, and
one end of the first capacitive device (C1) is connected to the display unit (10).

4. The pixel circuit of claim 1, 2 or 3wherein
the first switching device (T1) includes,
a gate of the first switching device (T1) connected to a first scan line;
a first electrode of the first switching device (T1) connected to a data line;
and
a second electrode of the first switching device (T1) connected to a first electrode of the first capacitive device (C1), and
the second switching device includes,
a gate of the second switching device (T2) connected to a second scan line; a first electrode of the second switching device (T2) connected to the data line; and
a second electrode of the second switching device (T2) connected to a first electrode of the second capacitive device (C2).

5. The pixel circuit of any preceding claim, further comprising:
a third switching device (T3) configured to selectively charge one of the first capacitive device (C1) and the second capacitive device (C2) based on the first scan signal.

6. The pixel circuit of claim 5, wherein
the third switching device (T3) includes,
a gate of the third switching device (T3) connected to a first scan line;
a first electrode of the third switching device (T3) being commonly connected to a second electrode of the first capacitive device (C1) and a first electrode of the second capacitive device (C2); and
a second electrode of the third switching device (T3) connected to a second electrode of the second capacitive device (C2),
and optionally wherein the second electrode of the third switching device (T3) is connected to ground.

7. The pixel circuit of claim 6, further comprising the display unit (10) , which comprises:
a pixel electrode (11) connected to a first electrode of the first capacitive device (C1); and
an opposite electrode (19) connected to a common power supply voltage source, and
wherein the second electrode of the third switching device (T3) is connected to the common power supply voltage source.

8. The pixel circuit of any of claims 1 to 4, further comprising:
a third switching device (T4) configured to selectively supply the data signal to a third capacitive device (C3) of the plurality of capacitive devices based on a third scan signal,
and optionally wherein:
the first switching device (T1) is configured to charge the first capacitive device (C1) according to the data signal during a first logic high period of the first scan signal,
the second switching device (T2) is configured to charge the second capacitive device (C2) according to the data signal when the first logic high period of the first scan signal ends and a first logic high period of the second scan signal starts, and
the third switching device (T4) is configured to charge the third capacitive device (C3) according to the data signal when the first logic high period of the second scan signal ends and a first logic high period of the third scan signal starts,and further optionally configured such that the first, second and third switching devices (T1,T2,T4) are switched off and the driving voltage is applied to the display unit at the end of the first logic high period of the third scan signal.

9. The pixel circuit of claim 8, wherein
the first capacitive device (C1), the second capacitive device (C2), and the third capacitive device (C3) are connected in series, and
one end of the first capacitive device (C1) is connected to the display unit (10).

10. The pixel circuit of claim 8 or 9, wherein
the first switching device includes,
a gate of the first switching device (T1) connected to a first scan line;
a first electrode of the first switching device (T1) connected to a data line;
and
a second electrode of the first switching device (T1) connected to a first electrode of the first capacitive device (C1),
the second switching device includes,
a gate of the second switching device (T2) connected to the second scan line;
a first electrode of the second switching device (T2) connected to the data line; and
a second electrode of the second switching device (T2) connected to a first electrode of the second capacitive device (C2), and
the third switching device (T4) includes,
a gate of the third switching device (T4)connected to a third scan line;
a first electrode of the third switching device (T4) connected to the data line;
and
a second electrode of the third switching device (T4) connected to a first electrode of the third capacitive device (C3).

11. The pixel circuit of claim 10, further comprising:
a fourth switching device (T3) configured to selectively charge one of the first capacitive device (C1) and the second capacitive device (C2) based on the first scan signal; and
a fifth switching device (T5) configured to selectively charge one of the second capacitive device (C2) and the third capacitive device (C3) based on the second scan signal,
and optionally wherein the fourth switching device (T3) includes:
a gate of the fourth switching device (T3) connected to a first scan line (Vs1) ;
a first electrode of the fourth switching device (T3) being commonly connected to a second electrode of the first capacitive device (C1) and a first electrode of the second capacitive device (C2); and
a second electrode of the fourth switching device (T3) is connected to ground, and
the fifth switching device includes,
a gate of the fifth switching device (T5) connected to the second scan line;
a first electrode of the fifth switching device (T5) being commonly connected to a second electrode of the second capacitive device (C2) and a first electrode of the third capacitive device (C3); and
a second electrode of the fifth switching device (T5) connected to ground.

12. A method of operating a pixel circuit to drive a display unit, the pixel circuit including a first switching device (T1) having a gate of the first switching device to which a first scan signal is supplied, a first electrode of the first switching device to which a data signal is supplied and a second electrode of the first switching device connected to a first electrode of a first capacitive device (C1), a second switching device (T2) having a gate of the second switching device to which a second scan signal is supplied, a first electrode of the second switching device to which the data signal is supplied, and a second electrode of the second switching device connected to a first electrode of a second capacitive device (C2), and a third switching device (T3) having a gate of the third switching device to which the first scan signal is supplied, a first electrode of the third switching device being commonly connected to a second electrode of the first capacitive device (C1) and a first electrode of the second capacitive device (C2), and a second electrode of the third switching device (T3) being commonly connected to a second electrode of the second capacitive device (C2) and a common power supply voltage source, and the display unit (10) being connected between the first electrode of the first capacitive device and the common power supply voltage source, the method comprising:
generating the first scan signal such that the first switching device (T1) and the third switching device (T3) are on during a first time period; and
generating the second scan signal such that the second switching device (T2) is on during a second time period,
wherein the first and second scan signals are generated such that the first, second and third switching devices (T1 ,T2,T3) are off during a third time period.

13. The method of claim 12, further comprising:
maintaining the common power supply voltage source at a first logic level during the first and second time periods; and
switching the common power supply voltage source to a second logic level higher than the first logic level during the third time period.

14. The method of claim 12 or 13, further comprising:
maintaining the common power supply voltage source at a first logic level during the first and second time periods; and
switching the common power supply voltage source to a second logic level lower than the first logic level during the third time period.

15. The method of claim 12, 13 or 14, further comprising:
charging the first capacitance device (C1) during the first time period;
charging the second capacitance device (C2) during the second time period;
and
supplying the charges of the first and second capacitance devices (C1,C2) to the display unit during the third time period,and optionally, further comprising:
maintaining a logic level of the data signal during the first and second time periods.
